(19) **Europäisches Patentamt / European Patent Office / Office européen des brevets**

(11) **EP 2 714 834 B1**

(12) **EUROPEAN PATENT SPECIFICATION**

(45) Date of publication and mention
of the grant of the patent:
**16.11.2016 Bulletin 2016/46**

(51) Int Cl.:
**C09K 8/28** (2006.01)    **C09K 8/34** (2006.01)
**C09K 8/36** (2006.01)

(21) Application number: **12723794.9**

(22) Date of filing: **17.05.2012**

(86) International application number:
**PCT/US2012/038234**

(87) International publication number:
**WO 2012/166371 (06.12.2012 Gazette 2012/49)**

(54) **METHODS TO CHARACTERIZE FRACTURE PLUGGING EFFICIENCY FOR DRILLING FLUIDS**

VERFAHREN ZUR CHARAKTERISIERUNG DER FRAKTURVERSCHLUSSEFFIZIENZ VON
BOHRFLÜSSIGKEITEN

PROCÉDÉS POUR CARACTÉRISER L'EFFICACITÉ DU BOUCHAGE D'UNE FRACTURE POUR
DES FLUIDES DE FORAGE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **01.06.2011 US 201113150942**

(43) Date of publication of application:
**09.04.2014 Bulletin 2014/15**

(73) Proprietor: **Halliburton Energy Services, Inc.**
**Houston, TX 77072 (US)**

(72) Inventors:
• **KULKARNI, Sandeep D.**
**Pune**
**Maharashtra 411001 (IN)**
• **SAVARI, Sharath**
**Pune**
**Maharashtra 411001 (IN)**
• **KUMAR, Arunesh**
**Pune**
**Maharashtra 411001 (IN)**

• **MILLER, Mathew L.**
**Spring, TX 77381 (US)**
• **MURPHY, Robert J.**
**Kingwood, TX 77339 (US)**
• **JAMISON, Dale E.**
**Humble, TX 77346 (US)**

(74) Representative: **Hoffmann Eitle**
**Patent- und Rechtsanwälte PartmbB**
**Arabellastraße 30**
**81925 München (DE)**

(56) References cited:
US-A- 4 561 985        US-A1- 2009 008 095
US-A1- 2009 255 668    US-A1- 2010 018 294
US-A1- 2010 137 168

• DAVID F. JAMES: ANNU. REV. FLUID MECH., vol.
41, 2009, - 2009, pages 129-142, XP002679838,

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

**BACKGROUND**

The present invention relates to a method for determining the concentration of particulates to include in a drilling fluid.

A drilling fluid or mud is a specially designed fluid that is circulated through a wellbore as the wellbore is being drilled to facilitate the drilling operation. The various functions of a drilling fluid include removing drill cuttings from the wellbore, cooling and lubricating the drill bit, aiding in support of the drill pipe and drill bit and providing a hydrostatic head to maintain the integrity of the wellbore walls, and prevent well blowouts. Specific drilling fluid systems, which can be oil-based or aqueous-based, are selected to optimize a drilling operation in accordance with the characteristics of a particular geological formation.

Treatment fluids often contain additives to adjust the characteristics of the fluid (*e.g.,* wettability or viscosity) or to provide for a specific treatment (*e.g.,* lost circulation control or fracturing) in an effort to efficiently and effectively treat a subterranean formation. As used herein, the term "treatment" or "treating" refers to any subterranean operation that uses a fluid in conjunction with a desired function and/or for a desired purpose. The term "treatment" or "treating" does not imply any particular action by the fluid.

One of the issues facing drillers today is lost circulation. Lost circulation is loss of a drilling fluid into a subterranean formation through natural or induced voids. Lost circulation leads to significant loss in time and increase in costs due to the loss of whole drilling fluid, wasted rig time, and in the worst cases may lead to lost wellbores, side tracked or bypassed wells, abandoned wells, relief wells, and lost petroleum reserves. This is especially a problem in formations that have zones that have large voids.

Particulates, a common additive in drilling fluids, can help modulate the flow of fluids within, into, and out of the subterranean formation and/or the wellbore. More specifically, particulates may be used in drilling fluids to bridge fractures, provide fluid loss control, provide lost circulation control, seal surfaces for fluid diversion, plug voids, prop open fractures, and any combination thereof. The types and concentration of particulates added to a drilling fluid greatly impact the efficacy and efficiency of a given treatment. For example, the size and shape of the particulates can help determine whether the particulates allow or retard fluid flow. For example, proppants are designed to be substantially spherical so as to allow fluid flow around the particle as it holds open a void. Fibers have been of interest as particulate additives, but fibers may lead to problems like high viscosity and plugging downhole tools before reaching the formation.

Particulate concentration in a drilling fluid is estimated based on experiences with implementation in similar subterranean formations. As new particulates, *e.g.,* lost circulation materials, and drilling fluids become available, a need exists to quickly determine an appropriate concentration of particulate to include in a treatment fluid to provide the appropriate level of fluid flow within, into, and out of a subterranean formation and/or wellbore.

US 4,562,985 A discloses methods for controlling interparticle interactions in a fluids by addition of glycol, measuring first normal stress difference ($N_1$) values and correlating them with a variation in the glycol concentration.

US 2010/0018294 A1 discloses a method comprising measuring the $N_1$ value of a drilling fluid and correlating this with the extent of crosslinking.

US 2010/0137168 teaches compositions and methods for controlling fluid loss in wellbore operations.

US 2009/0008095 discloses a method utilizing a drilling fluid comprising a base fluid and particulates, the base fluid without the particulates having a first normal stress difference $N_{1(B)}$ and the base fluid with the particulates having a first normal stress difference $N_{1(A)}$.

D. F. James, Annu. Rev. Fluid Mech., 2009, vol. 41, pp. 129-142 discloses the shear stress and $N_1$ values of Boger fluids.

US 2009/0255668 A1 teaches a method in which the concentration of particulates in a drilling fluid is optimized in terms of permeability and partial monolayer fracture stability.

**SUMMARY OF THE INVENTION**

An aspect of the present invention is a method for determining the concentration of particulates to be contained in a drilling fluid, the method comprising the steps of:

(i) providing a test base drilling fluid having a first normal stress difference $N_{1(TB)}$, adding a first concentration of test particulates to the test base drilling fluid, and adjusting the concentration of the test particulates in the test base drilling fluid so as to achieve a minimum concentration of test particulates which enables the fluid to cause plugging of a tapered slot in a particle plugging apparatus, wherein the test base drilling fluid containing the minimum concentration of test particulates has a first normal stress difference $N_{1(TA)}$;

(ii) calculating the $\Delta N_{1(P)}$ value of the test base drilling fluid, wherein $\Delta N_{1(P)} = |N_{1(TA)}| - |N_{1(TB)}|$; and

(iii) providing a drilling fluid comprising a base drilling fluid and a plurality of particulates, and adjusting the concentration of particulates contained in the drilling fluid based on a comparison between the $\Delta N_{1(F)}$ value of the drilling fluid and the $\Delta N_{1(P)}$ value of the test drilling fluid calculated in step (ii), such that the drilling fluid satisfies $\Delta N_{1(F)} \geq \Delta N_{1(P)}$;

wherein $\Delta N_{1(F)} = |N_{1(A)}| - |N_{1(B)}|$, $N_{1(A)}$ is the first normal stress difference of the drilling fluid containing the particulates, and $N_{1(B)}$ is the first normal stress difference of the drilling fluid in the absence of the particulates; and

wherein each first normal stress difference is determined by rotational rheometry using a parallel plate geometry at 25°C, 101,325 Pa (1 atm) and a plate gap of 1 mm, and the first normal stress differences apply to shear rates greater than $5\ s^{-1}$.

The features and advantages of the present invention will be readily apparent to those skilled in the art upon a reading of the description of the preferred embodiments that follows.

## BRIEF DESCRIPTION OF THE DRAWINGS

The following figures are included to illustrate certain aspects of the present invention, and should not be viewed as exclusive embodiments. The subject matter disclosed is capable of considerable modification, alteration, and equivalents in form and function, as will occur to those skilled in the art and having the benefit of this disclosure.

Figure 1 is a comparison of First Normal Stress Differences of two drilling fluids with and without a fiber particulate of length 3000 $\mu m$.

Figure 2 is a comparison of First Normal Stress Differences of two drilling fluids with and without a fiber particulate of length 150 $\mu m$.

Figure 3 is a comparison of First Normal Stress Differences of two drilling fluids with and without a fiber particulate of length 2000 $\mu m$.

Figure 4 is a schematic of the Tapered Slot apparatus used in the tests described herein.

Figure 5 is optical micrographs of four fibers used as lost circulation materials.

Figure 6 is photographs of aqueous-based drilling fluids with varied fiber concentrations.

## DETAILED DESCRIPTION

Of the many advantages of the present invention, the present invention provides a method of optimizing the concentration of particulates in a drilling fluid through the rheological methods disclosed herein. The fluid provides a desired level of fluid flow into or out of a subterranean formation and/or wellbore. Fluid flow within, into, and out of a subterranean formation may be transmitted through voids in the subterranean formation and/or a wellbore. By way of nonlimiting example, voids may include pores, vugs, fissures, cracks, and fractures that may be natural or man-made. In some embodiments, controlling fluid flow may be achieved by methods including, but not limited to, bridging fractures, providing fluid loss control, providing lost circulation control, sealing surfaces for fluid diversion, and/or plugging voids. In preferred embodiments, the rheological methods of the present invention allow one to design fluids to have an optimal degree of fluid loss control and/or lost circulation control to prevent leak off of a treatment fluid into a portion of a subterranean formation neighboring a void. The rheological methods of the present invention provide a unique avenue to build a drilling fluid that will plug voids within a subterranean formation without directly testing the plugging of a matrix with a particular drilling fluid having a particulate concentration. Moreover, the methods provided herein allow for controlling the amount of particulates added to a drilling fluid to achieve a desired function, yet ensure particulate concentrations are not used is great excess, which for some particulates could mean significant cost savings. Additionally, with the ever growing library of particulates and drilling fluids, the present invention provides an avenue for easy implementation of an optimal drilling fluid needed for a given function that allows for optimal use of the fluids and particulates within the library.

The concentration of particulates in a drilling fluid may be important to the efficacy and efficiency of fluid flow control, fluid loss control, and lost circulation control. Some embodiments of the present invention provide for methods of determining an optimal concentration or a concentration threshold of particulates in a drilling fluid to provide a desired level of fluid flow control, fluid loss control, and lost circulation control. In some embodiments, the rheological properties of a drilling fluid with and without particulates may be used to determine the level of fluid flow control, fluid loss control, and lost circulation control.

It should be understood that the term "particulate" or "particle," as used in this disclosure, includes all known shapes of materials, including substantially spherical materials, low to high aspect ratio materials, fibrous materials, polygonal materials (such as cubic materials), and mixtures thereof.

According to the methods of the present invention, the flow of a fluid in a void may be classified as a complex extensional flow where the extensional flow viscosity depends on the First Normal Stress Difference ($N_1$). Adding par-

ticulates to a drilling fluid may change the magnitude of $N_1$ as a function of concentration of the particulates. As used herein, the magnitude of $N_1$ is the absolute value of $N_1$ and may be expressed as $|N_1|$. Comparing $|N_1|$ of the drilling fluid with and without particulates may provide a measure of the ability of a drilling fluid to control fluid flow within a subterranean formation. Embodiments of the present invention provide for such a measurement and subsequent analysis.

Provided are the definitions and formulas of values measured and calculated herein. It should be understood that unless otherwise specified, calculations and/or comparisons are of $N_1$ values measured by the same rheological method.

Normal Stress Values based on the Fluid and Additive(s) used in the TS Plug Test

$\Delta N_{1(P)}$ - Plug Normal Stress Difference calculated by $|N_{1(TA)}| - |N_{1(TB)}|$, wherein each First Normal Stress Difference value is measured by the same method

$N_{1(TB)}$ - First Normal Stress Difference of a test base drilling fluid

$N_{1(TA)}$ - First Normal Stress Difference of a test base drilling fluid with a test particulate concentration, wherein the concentration of the particulate is the minimum concentration needed to plug a tapered slot as determined by the TS Plug Method

Normal Stress Values for the Fluid and Additive(s) for Potential Implementation in a Wellbore

$\Delta N_{1(F)} = |N_{1(A)}| - |N_{1(B)}|$, wherein each First Normal Stress Difference value is measured by the same method

$N_{1(B)}$ - First Normal Stress Difference of the base drilling fluid

$N_{1(A)}$ - First Normal Stress Difference of the base drilling fluid with a concentration of particulates

Comparison of Normal Stress Values

$\Delta N_{1(F)} \geq \Delta N_{1(P)}$ may provide for lost circulation control

$\Delta N_{1(F)} < \Delta N_{1(P)}$ may provide for fluid flow

The following testing procedures, equations, and comparison may be used to determine the optimal concentration of particulates in a drilling fluid for use in a subterranean formation to provide for adequate lost circulation control or other flow characteristics.

It should be noted that when "about" is provided at the beginning of a numerical list, "about" modifies each number of the numerical list.

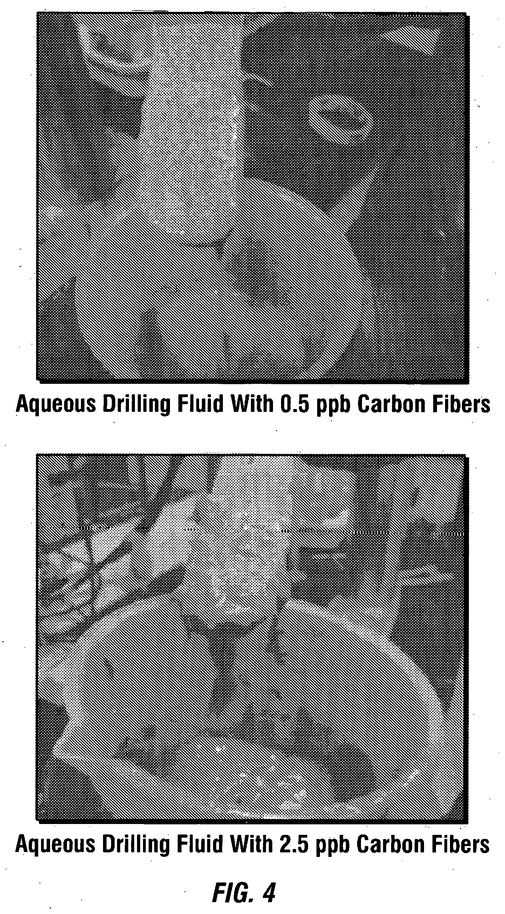

The TS Plug Method, using a Particle Plugging Apparatus (Figure 4B), may be used to test the performance of particulates in forming an impermeable plug or bridge in the filtering media and to arrest the fluid loss. A Particle Plugging Apparatus comprises a 500 mL volume cell that has a movable piston at the bottom and an assembly for sealing the filter media in while testing at the top. The fluid with particulates to be tested is loaded into the cell. The cell is positioned with pressure applied from the bottom of the cell and the filtrate collected from the top. This may help prevent other components of the drilling fluid that settle during the static test from contributing to the performance of the particulate. Pressure, applied by a two-stage hydraulic pump or using a nitrogen pressure line, is transferred to the drilling fluid through the floating piston in the cell. The filter media employed in the TS Plug Method is a tapered slot (Figure 4A).

A variety of tapered slots may be used in the rheological methods of the present invention. A tapered slot consists of a machined metal with a slot that tapers from one end to another; it physically resembles a fracture. Figure 4A provides a schematic and conceptual view of an example tapered slot where the slot tapers from 2.5 mm wide at the opening end to 1 mm wide at the closing end. In some embodiments, a tapered slot may taper from any opening width to any closing width over a certain length. As used herein, "slot" could be of any opening and/or closing shape including, but not limited to, circular, ovular, rectangular or square, slit with rounded ends, and irregular. One skilled in the art would understand that it may be necessary to choose a tapered slot to resemble a void of a subterranean formation for which fluid flow control, fluid loss control, and lost circulation control is desired. Suitable widths, for either the opening or closing end, may range from a lower limit of greater than about 0.1 mm, 0.5 mm, 1 mm, or 2 mm, to an upper limit of less than about 6 mm, 5 mm, 3 mm, 2 mm, or 1 mm, where the thickness may range from any lower limit to any upper limit and encompass any subset between the upper and lower limits. Some of the lower limits listed above are greater than some of the listed upper limits, one skilled in the art will recognize that the selected subset will require the selection of an upper limit in excess of the selected lower limit.

The Normal Stress Difference ($N_1$) is measured by rotational rheometry using a parallel plate geometry, e.g. using a MCR-301 Model Anton Paar Rheometer using PP-50 parallel plate geometry. The measurements are conducted at 25°C and atmospheric pressure with the gap between the plates set at 1 mm. About 2-3 mL of base drilling fluid may be placed in the gap and subjected to shear rate ramp from 0.1 s$^{-1}$ to 50 s$^{-1}$. Fifty data points (shear stress and $N_1$ values) may be collected at each selected shear rate. The test duration may take about one to three hours.

$N_{1(TA)}$ is determined by measuring the $N_1$ value of the test base drilling fluid comprising the minimum concentration of test particulates needed to plug a tapered slot, as determined by the TS Plug Method described above with reference to Figures 4A and 4B.

Figure 4A provides a schematic and conceptual view where the slot tapers from 1 mm at the top to 2.5 mm at the bottom, which is the tapered slot used in the examples provided.

The performance of the particulate is determined by the ability of the particulate to form an impermeable plug or bridge in the filtering media and to arrest the fluid loss.

The minimum concentration of the test particulate in the test base drilling fluid is determined by varying the concentration of the test particulate in the test base fluid to achieve the minimum concentration by which a tapered slot is plugged. It should be understood that "minimum concentration" and "threshold concentration" may be used interchangeably and, as used herein, does not necessarily mean an absolute minimum to several significant digits, rather minimum concentration may be to a desired significant digit of one skilled in the art. One skilled in the art would understand the number of significant digits needed in determining a minimum concentration given the level of accuracy desired.

The Plug Normal Stress Difference ($\Delta N_{1(P)}$) is determined by measuring $N_{1(TB)}$ and $N_{1(TA)}$ for the test base fluid without and with test particulates and calculating $\Delta N_{1(P)} = |N_{1(TA)}| - |N_{1(TB)}|$. In addition, $N_{1(A)}$ and $N_{1(B)}$ are measured for the subject drilling fluid with and with particulates and $\Delta N_{1(F)} = |N_{1(A)}| - |N_{1(B)}|$ calculated.

The base drilling fluid and the test base drilling fluid may be the same or different, including comparisons between an aqueous-based drilling fluid and an oil-based drilling fluid. Also, the particulates and the test particulates may be the same or different.

A comparison of $\Delta N_{1(F)}$ and $\Delta N_{1(P)}$ may be used to determine an optimal concentration of particulates to include in the base drilling fluid. The concentration of particulates in the base drilling fluid is adjusted to provide $\Delta N_{1(F)} \geq \Delta N_{1(P)}$, which may provide lost circulation control by reducing fluid flow through voids.

Suitable locations for measuring an $N_1$ value may be anywhere the appropriate equipment is available including, but not limited to, in a lab, at a production facility, at a wellbore site, and any combination thereof.

A suitable base drilling fluid and/or a suitable test base drilling fluid may include an oil-based fluid, an aqueous-based fluid, a water-in-oil emulsion, or an oil-in-water emulsion. Suitable oil-based fluids may include an alkane, an olefin, an aromatic organic compound, a cyclic alkane, a paraffin, a diesel fluid, a mineral oil, a desulfurized hydrogenated kerosene, and any combination thereof. Suitable aqueous-based fluids may include fresh water, saltwater (*e.g.*, water containing one or more salts dissolved therein), brine (*e.g.,* saturated salt water), seawater, and any combination thereof. Examples of suitable invert emulsions include those disclosed in U.S. Patent Number 5,905,061, U.S. Patent Number 5,977,031, and U.S. Patent Number 6,828,279.

Examples of lost circulation materials suitable for use in the present invention may be any known lost circulation material, bridging agent, fluid loss control agent, diverting agent, plugging agent, or the like suitable for use in a subterranean formation. A suitable lost circulation material may be natural or synthetic, degradable or nondegradable, particles or fibers, and mixtures thereof.

Suitable examples of materials for a lost circulation material include, but are not limited to, sand, shale, ground marble, bauxite, ceramic materials, glass materials, metal pellets, high strength synthetic fibers, cellulose flakes, wood, resins, polymer materials (crosslinked or otherwise), polytetrafluoroethylene materials, nut shell pieces, cured resinous particulates comprising nut shell pieces, seed shell pieces, cured resinous particulates comprising seed shell pieces; fruit pit pieces, cured resinous particulates comprising fruit pit pieces, composite particulates, and any combination thereof. Suitable composite particulates may comprise a binder and a filler material wherein suitable filler materials include silica, alumina, fumed carbon, carbon black, graphite, mica, titanium dioxide, meta-silicate, calcium silicate, kaolin, talc, zirconia, boron, fly ash, hollow glass microspheres, solid glass, and any combination thereof.

In some embodiments, a lost circulation material may be degradable. Nonlimiting examples of suitable degradable materials that may be used in the present invention include, but are not limited to, degradable polymers (crosslinked or otherwise), dehydrated compounds, and/or mixtures of the two. In choosing the appropriate degradable material, one should consider the degradation products that will result. As for degradable polymers, a polymer is considered to be "degradable" herein if the degradation is due to, *inter alia,* chemical and/or radical process such as hydrolysis, oxidation, enzymatic degradation, or UV radiation. Suitable examples of degradable polymers for a lost circulation material for use in the present invention that may be used include, but are not limited to, those described in the publication of Advances in Polymer Science, Vol. 157 entitled "Degradable Aliphatic Polyesters" edited by A. C. Albertsson. Polymers may be homopolymers, random, linear, crosslinked, block, graft, and star- and hyper-branched. Such suitable polymers may be prepared by polycondensation reactions, ring-opening polymerizations, free radical polymerizations, anionic polymerizations, carbocationic polymerizations, and coordinative ring-opening polymerization, and any other suitable process. Specific examples of suitable polymers include polysaccharides such as dextran or cellulose; chitin; chitosan; proteins; orthoesters; aliphatic polyesters; poly(lactide); poly(glycolide); poly($\varepsilon$-caprolactone); poly(hydroxybutyrate); poly(anhydrides); aliphatic polycarbonates; poly(orthoesters); poly(amino acids); poly(ethylene oxide); and polyphosphazenes. Of these suitable polymers, aliphatic polyesters and polyanhydrides are preferred. Dehydrated compounds may be used in accordance with the present invention as a degradable solid particulate. A dehydrated compound is suitable for use in the present invention if it will degrade over time as it is rehydrated. For example, particulate solid anhydrous borate material that degrades over time may be suitable. Specific examples of particulate solid anhydrous borate materials that may be used include, but are not limited to, anhydrous sodium tetraborate (also known as anhydrous borax) and anhydrous boric acid. Certain degradable materials may also be suitable as compositions of a solid degradable particulate for use in the present invention. One example of a suitable blend of materials is a mixture of poly(lactic acid) and sodium borate where the mixing of an acid and base could result in a neutral solution where this is desirable. Another example would include a blend of poly(lactic acid) and boric oxide, a blend of calcium carbonate and poly(lactic) acid, a blend of magnesium oxide and poly(lactic) acid, and the like. In certain preferred embodiments, the degradable material is calcium carbonate plus poly(lactic) acid. Where a mixture including poly(lactic) acid is used, in certain preferred embodiments the poly(lactic) acid is present in the mixture in a stoichiometric amount, e.g., where a mixture of calcium carbonate and poly(lactic) acid is used, the mixture comprises two poly(lactic) acid units for each calcium carbonate unit. Other blends that undergo an irreversible degradation may also be suitable, if the products of the degradation do not undesirably interfere with either the conductivity of the filter cake or with the production of any of the fluids from the subterranean formation.

In some embodiments, a combination of lost circulation materials may be used. In some embodiments, a combination of lost circulation materials with a high aspect ratio and a low aspect ratio may be used. One skilled in the art can determine which of the lost circulation materials included herein qualify as high aspect ratio and/or low aspect ratio. As used herein, high aspect ratio are aspect ratios greater than about 2, and low aspect ratios are aspect ratios less than about 2. One skilled in the art will understand that some lost circulation materials provided herein may be available in different shapes and/or sizes which would determine the aspect ratio. Suitable high aspect ratio lost circulation materials may include, but not be limited to, fibers of cellulose including viscose cellulosic fibers, oil coated cellulosic fibers, and fibers derived from a plant product like paper fibers; carbon including carbon fibers; melt-processed inorganic fibers including basalt fibers, woolastonite fibers, non-amorphous metallic fibers, ceramic fibers, and glass fibers; polymeric fibers including polypropylene fibers and poly(acrylic nitrile) fibers; and any combination thereof.

In certain embodiments, the present invention is directed to the optimal adjustment of a concentration of particulates based on $N_1$ measurements and comparisons. In some embodiments, a preferred concentration of particulates in a base drilling fluid may range from a lower limit of greater than about 0.03 kg/m$^3$ (0.01 pounds per barrel ("PPB")), 0.14 kg/m$^3$ (0.05 PPB), 0.3 kg/m$^3$ (0.1 PPB), 1.4 kg/m$^3$ (0.5 PPB), 3 kg/m$^3$ (1 PPB), 9 kg/m$^3$ (3 PPB), 14 kg/m$^3$ (5 PPB), 29 kg/m$^3$ (10 PPB), 71 kg/m$^3$ (25 PPB), or 143 kg/m$^3$ (50 PPB) to an upper limit of less than about 428 kg/m$^3$ (150 PPB), 285 kg/m$^3$ (100 PPB), 214 kg/m$^3$ (75 PPB), 143 kg/m$^3$ (50 PPB), 71 kg/m$^3$ (25 PPB), 29 kg/m$^3$ (10 PPB), 14 kg/m$^3$ (5 PPB), 11 kg/m$^3$ (4 PPB), 9 kg/m$^3$ (3 PPB), 6 kg/m$^3$ (2 PPB), 3 kg/m$^3$ (1 PPB), or 1.4 kg/m$^3$ (0.5 PPB) in the base fluid, where the amount may range from any lower limit to any upper limit and encompass any subset between the upper and lower limits. Some of the lower limits listed above are greater than some of the listed upper limits, one skilled in the art will recognize that the selected subset will require the selection of an upper limit in excess of the selected lower limit.

The methods and compositions of the present invention may be suitable for use in subterranean formations.

The methods and compositions of the present invention may be used in many different types of subterranean treatment operations. Such operations include, but are not limited to, drilling operations, lost circulation operations, filter cake operations, stimulation operations, sand control operations, completion operations, acidizing operations, scale inhibiting operations, water-blocking operations, clay stabilizer operations, biocide operations, fracturing operations, frac-packing operations, gravel packing operations, wellbore strengthening, and sag control. The methods and compositions of the present invention may be used in full-scale operations or pills. As used herein, a "pill" is a type of relatively small volume of specially prepared treatment fluid placed or circulated in the wellbore.

Depending on the use of the treatment fluid, in some embodiments, other additives may optionally be included in a base fluid for use in the present invention. Examples of such additives may include, but are not limited to, salts; weighting agents; inert solids; fluid loss control agents; emulsifiers; dispersion aids; corrosion inhibitors; emulsion thinners; emulsion thickeners; viscosifying agents; high-pressure, high-temperature emulsifier-filtration control agents; surfactants; particulates; proppants; lost circulation materials; pH control additives; foaming agents; breakers; biocides; crosslinkers; stabilizers; chelating agents; scale inhibitors; gas; mutual solvents; oxidizers; reducers; and any combination thereof. A person of ordinary skill in the art, with the benefit of this disclosure, will recognize when an additive should be included in a base treatment fluid, as well as an appropriate amount of said additive to include.

In some embodiments the base fluid may include a polar organic molecule. Polar organic molecules suitable for use in the present invention may include any polar organic molecule including protic and aprotic organic molecules. Suitable protic compounds may include organic molecules with at least one functional group to include an alcohol, an acid, an amine, an amide, and any combination thereof. Suitable aprotic compounds may include organic molecules with at least one functional group to include an ester, an ether, a nitrile, a ketone, a sulfoxide, and any combination thereof. Suitable polar organic molecules may include an organic molecule with multiple functional groups including mixtures of protic and aprotic groups. In some embodiments, a base fluid may comprise multiple polar organic molecules. In some embodiments, a polar organic molecule may be present in a base fluid in an amount from a lower limit of greater than about 0.01%, 0.1%, 0.5%, 1%, 5%, or 10% to an upper limit of less than about 100%, 90%, 75%, 50%, 25%, 20%, 15%, 10%, 5%, 1%, 0.5%, or 0.1% by volume of the base fluid, where the amount may range from any lower limit to any upper limit and encompass any subset between the upper and lower limits. Some of the lower limits listed above are greater than some of the listed upper limits, one skilled in the art will recognize that the selected subset will require the selection of an upper limit in excess of the selected lower limit.

In some embodiments the concentration of particulates may be adjusted to provide for fluid flow control, fluid loss control, and lost circulation control. Where lost circulation control may be provided or desired, suitable particulates may include a lost circulation material or the like. Where fluid flow may be provided or desired, a suitable particulate may be a proppant. In some embodiments, the particulate may include a lost circulation material, a proppant, or a combination thereof.

Proppants suitable for use in the present invention may comprise any material suitable for use in subterranean operations. Suitable materials for these particulates include, but are not limited to, sand, bauxite, ceramic materials, glass materials, polymer materials, polytetrafluoroethylene materials, nut shell pieces, cured resinous particulates comprising nut shell pieces, seed shell pieces, cured resinous particulates comprising seed shell pieces, fruit pit pieces, cured resinous particulates comprising fruit pit pieces, wood, composite particulates, and any combination thereof. Suitable composite particulates may comprise a binder and a filler material wherein suitable filler materials include silica, alumina, fumed carbon, carbon black, graphite, mica, titanium dioxide, meta-silicate, calcium silicate, kaolin, talc, zirconia, boron, fly ash, hollow glass microspheres, solid glass, and any combination thereof. The mean particulate size generally may range from about 0.037 mm (400 mesh on the U.S. Sieve Series) to about 1 cm (2 mesh on the U.S. Sieve Series); however, in certain circumstances, other mean particulate sizes may be desired and will be entirely suitable for practice of the present invention. In particular embodiments, preferred mean particulate size distribution ranges are one or more of 3.4 mm/1.7 mm, 2.4 mm/1.2 mm, 1.7 mm/0.84 mm, 1.2 mm/0.56 mm, 0.84 mm/0.40 mm, 0.60 mm/0.30 mm, 0.4 mm/0.25 mm, 0.4 mm/0.21 mm, and 0.30 mm/0.21 mm (6/12, 8/16, 12/20, 16/30, 20/40, 30/50, 40/60, 40/70, and 50/70 mesh). Moreover, fibrous materials, that may or may not be used to bear the pressure of a closed fracture, may be included in certain embodiments of the present invention.

To facilitate a better understanding of the present invention, the following examples of preferred embodiments are given. In no way should the following examples be read to limit, or to define, the scope of the invention.

EXAMPLES

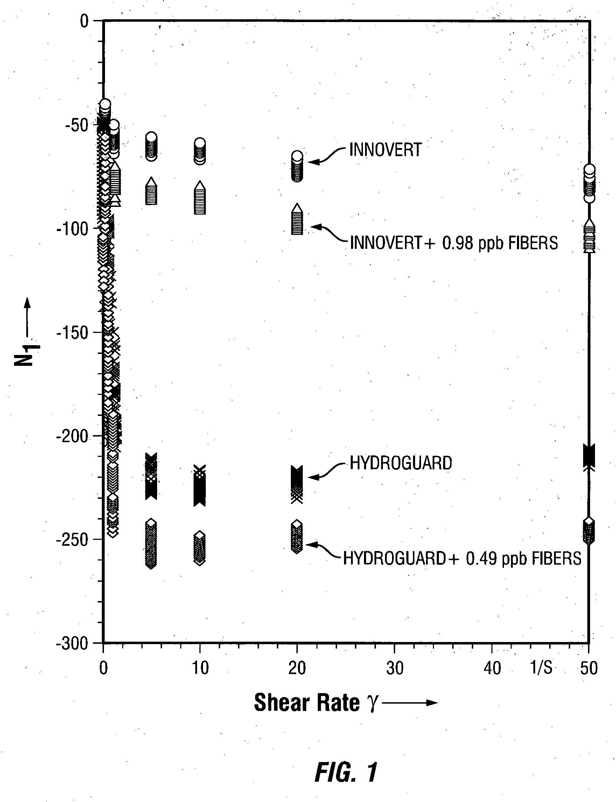

*Measuring First Normal Stress Difference.* The first normal stress difference ($N_1$) was measured via rotational rheometry test using a MCR-301 Model Anton Paar Rheometer using PP-50 parallel plate geometry. The measurements were conducted at 25°C and atmospheric pressure with the gap between the plates set at 1 mm. About 2-3 mL of base drilling fluid was placed in the gap which was then subjected to shear rate ramp from 0.1 s$^{-1}$ to 50 s$^{-1}$. Fifty data points (shear stress and $N_1$ values) were collected at each selected shear rate. The test duration was about one to three hours. Figures 1-3 shows the normal stress difference ($N_1$) vs. shear rate for different base drilling fluids with varied concentrations of lost circulation fibers.

*TS Plug Method.* The TS Plug Method, using a Particle Plugging Apparatus (Figure 4B), may be used to test the performance of particulates in forming an impermeable plug or bridge in the filtering media and to arrest the fluid loss. A Particle Plugging Apparatus comprises a 500 mL volume cell that has a movable piston at the bottom and an assembly for sealing the filter media in while testing at the top. The fluid with particulates to be tested is loaded into the cell. The cell is positioned with pressure applied from the bottom of the cell and the filtrate collected from the top. This may help prevent other components of the drilling fluid that settle during the static test from contributing to the performance of the particulate. Pressure, applied by a two-stage hydraulic pump or using a nitrogen pressure line, is transferred to the drilling fluid through the floating piston in the cell. The filter media employed in the TS Plug Method is a tapered slot (Figure 4A).

A tapered slot consists of a machined metal with a slot that tapers from one end to another which physically resembles a fracture. Figure 4A provides a schematic and conceptual view where the slot tapers from 1 mm at the top to 2.5 mm at the bottom which is the tapered slot used in the examples provided.

The performance of the particulate is determined by the ability of the particulate to form an impermeable plug or bridge in the filtering media and to arrest the fluid loss.

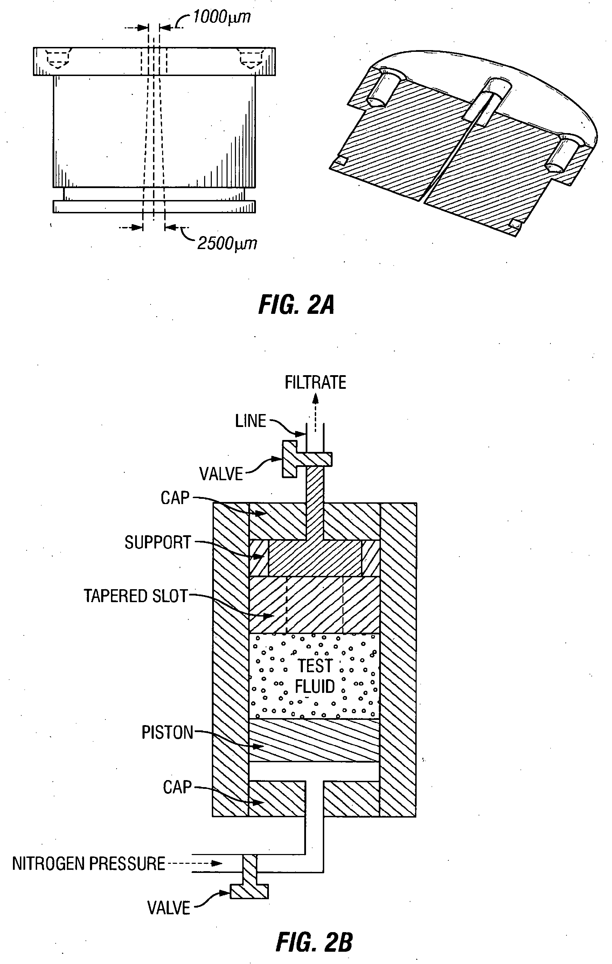

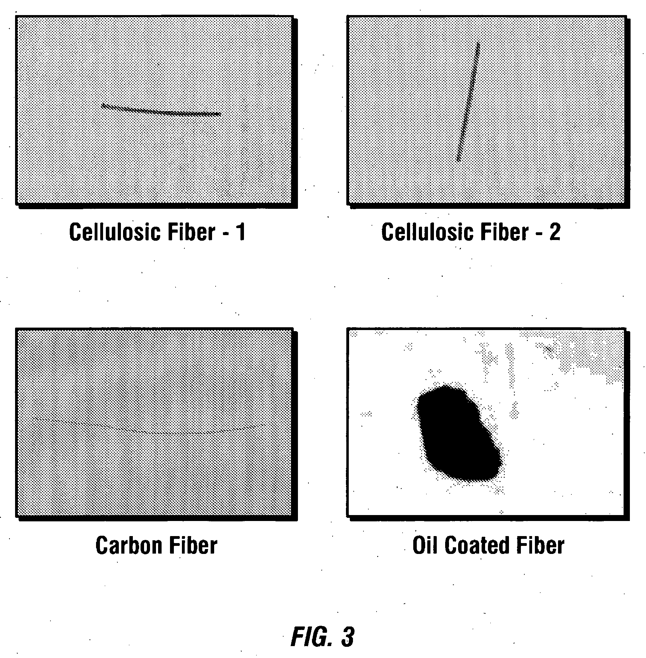

*Example 1.* The TS Plug Method was performed with the test base fluid of HYDROGUARD® (an aqueous-based drilling fluid, available from Halliburton Energy Services, Inc. in Houston, TX) and lost circulation materials (test particulates) of PANEX®-35 (a tow weave carbon fiber, available from Zoltek Corporation in St. Louis, MO), ground marble with d(50) = 1200 $\mu$m, and resilient graphite carbon with d(50) = 1000 $\mu$m were added to a drilling fluid sample at a concentration of 1.40 kg/m³ (0.49 PPB), 143 kg/m³ (50 PPB), and 23 kg/m³ (8 PPB), respectively. A concentration of 1.40 kg/m³ (0.49 PPB) provided a minimum concentration to plug the tapered slot with dimensions as shown in Figure 4A. Additionally, HYDROGUARD® was tested with particulates of PANEX-32® (a tow weave carbon fiber, available from Zoltek Corporation in St. Louis, MO) and BDF®-456 (fiber, available from Halliburton Energy Services, Inc. in Duncan, OK) with ground marble and resilient graphite. A concentration of 21.4 kg/m³ (7.5 PPB) of PANEX-32® and 10 kg/m³ (3.5 PPB) of BDF®-456 provided a minimum concentration to plug the tapered slot with corresponding rheological data shown in Figures 2 and 3, respectively.

*Example 2.* Using HYDROGUARD® and PANEX-35, $N_{1(TB)}$ and $N_{1(TA)}$ were measured with the specs provided above and $\Delta N_{1(P)} = |N_{1(TA)}| - |N_{1(TB)}|$ calculated to be 20 Pa at a shear rate of greater than 5 s⁻¹. A second base fluid of INNOVERT® (an oil-based drilling fluid with an oil-base of mineral oil and alkanes, available from Halliburton Energy Services, Inc. in Houston, TX) with the same PANEX-35 particulate was tested. The concentration of PANEX®-35 in INNOVERT® was adjusted so that $\Delta N_{1(F)} = |N_{1(A)}| - |N_{1(B)}| = 20$ Pa, wherein each First Normal Stress Difference values were also measured by the same method provided above. The concentration of PANEX-35 in INNOVERT® required to achieve $\Delta N_{1(F)} = 20$ Pa was 2.79 kg/m³ (0.98 PPB). Figure 1 shows the First Normal Stress Difference plots for HYDROGUARD®, HYDROGUARD® with 1.40 kg/m³ (0.49 PPB) PANEX®-35, INNOVERT®, and INNOVERT® with 2.79 kg/m³ (0.98 PPB) PANEX®-35. When this formulation was run through the tapered slot, plugging was observed within 20 mL of fluid passage. By comparison, INNOVERT® with 1.40 kg/m³ (0.49 PPB) of PANEX®-35 provided no plugging, which when measured for this formulation, $\Delta N_{1(F)} = 5$ Pa.

*Example 3.* A variety of mixed lost circulation material compositions were tested with the TS Plug Method to examine the particulate effects of high aspect ratio particulates with low aspect ratio particulates. The base fluids tested were an aqueous-based fluid and an oil based fluid with the following compositions.

| Aqueous-Based Drilling Fluid | | Oil-Based Drilling Fluid | |
|---|---|---|---|
| Product | Conc, kg/m³ (PPB) | Product | Conc, kg/m³ (PPB) |
| barite | as required | barite | as required |
| sodium chloride | as required | base oil for 65:35 oil to water ratio | as required |
| primary viscosifier | 3 (1) | water + CaCl₂ (250,000 ppm) | as required |
| sodium hydroxide | 0.71 (0.25) | emulsifier | 23 (8) |
| fluid loss additive | 0.43 (0.15) | lime | 4.3 (1.5) |
| shale stabilizer-1 | 1.4 (0.5) | fluid loss additive | 4.3 (1.5) |
| shale stabilizer-2 | 6(2) | viscosifier | 9(3) |
| shale stabilizer-3 | 14(5) | suspension agent | 14 (5) |
| fluid loss additive/viscosifier | 14 (5) | calcium carbonate 5 | 86 (30) |
| | | low end rheology modifier | 9(3) |
| | | drill solids | 57 (20) |

The particulates tested included ground marble (GM), resilient graphitic carbon (RGC), carbon fibers (CF), viscose cellulosic fibers, and oil coated cellulosic fibers (OCF). The ground marble and resilient graphitic carbon were tested in varying sizes. Properties of the fibers are as follows with optical micrographs of each in Figure 5.

| Fiber Tested | Fiber Length ($\mu$m) | Aspect Ratio |
|---|---|---|
| viscose cellulosic fibers - 1 (VCF1) | 1570 | ~28 |
| viscose cellulosic fibers - 2 (VCF2) | 1900 | ~35 |
| oil coated cellulosic fiber | 180 | 1.8 |

(continued)

| Fiber Tested | Fiber Length ($\mu$m) | Aspect Ratio |
|---|---|---|
| carbon fiber | 3000 | 50 |

The particulates were tested in the particle plugging apparatus and mud loss was measured for a variety of combinations as follows.

| Fluid Base | Particulates | Relative Ratio of Particulates | Concentration in Fluid, kg/m$^3$ (PPB) | Mud Loss, mL |
|---|---|---|---|---|
| aqueous | GM1200/RGC400 | 80/20 | 143/23.4 (50/8.2) | 70 |
| aqueous | GM1200/RGC1000 | 80/20 | 143/23.4 (50/8.2) | 90 |
| aqueous | GM600/RGC1000 | 80/20 | 143/23.4 (50/8.2) | 80 |
| aqueous | GM1200/VCF1 | 95/5 | 171/5.1 (60/1.8) | no control |
| aqueous | GM1200/VCF2 | 95/5 | 171/5.1 (60/1.8) | no control |
| aqueous | GM600/VCF1 | 95/5 | 171/5.1 (60/1.8) | no control |
| aqueous | GM1200/RGC400/VCF1 | 70/20/10 | 125/23.4/10 (44/8.2/3.5) | 10 |
| aqueous | GM1200/RGC400/VCF2 | 70/20/10 | 125/23.4/10 (44/8.2/3.5) | 10 |
| aqueous | GM1200/RGC1000/VCF1 | 70/20/10 | 125/23.4/10 (44/8.2/3.5) | 25 |
| aqueous | GM1200/RGC1000/VCF2 | 70/20/10 | 125/23.4/10 (44/8.2/3.5) | 40 |
| aqueous | GM1200/RGC400/CF | 79/20/1 | 140/23.4/1.4 (49/8.2/0.5) | 15 |
| aqueous | GM1200/RGC1000/CF | 79/20/1 | 140/23.4/1.4 (49/8.2/0.5) | 25 |
| aqueous | GM600/RGC1000/OCF | 65/20/15 | 117/23.4/11 (41/8.2/4) | 25 |
| aqueous | GM1200/RGC1000/OCF | 65/20/15 | 117/23.4/11 (41/8.2/4) | 40 |
| aqueous | GM1200/RGC400/OCF | 65/20/15 | 117/23.4/11 (41/8.2/4) | 10 |
| oil | GM1200/RCG1000 | 80/20 | | no control |
| oil | GM600/RCG1000 | 80/20 | | no control |
| oil | GM1200/RCG1000/CF | 79/20/1 | | no control |
| oil | GM1200/RCG400/CF | 79/20/1 | | 35 |
| oil | GM600/RCG1000/CF | 79/20/1 | | no control |
| oil | GM1200/RCG1000/VCF1 | 75/20/5 | | no control |
| oil | GM1200/RCG400/VCF1 | 75/20/5 | | no control |

*Example 4.* Figure 6 illustrates how the addition of fibers to a drilling fluid physically change the viscosity of a drilling fluid. Figure 6 are photographs taken of the aqueous-based drilling fluid of Example 3 with the addition of carbon fibers at 1.4 kg/m$^3$ (0.5 PPB) (top) and 7.1 kg/m$^3$ (2.5 PBB) (bottom). At high concentrations of fibers, the fluid may become unpumpable. In addition, observation of the physical change in viscosity was noted for other fiber-laden fluids. For example, aqueous-based drilling fluids with 15% v/v of a carbon fiber 150 $\mu$m in length had no significant visible change in viscosity, while only 5% v/v of a carbon fiber 3 mm in length resulted in a very thick mud.

Therefore, the present invention is well-adapted to attain the ends and advantages mentioned as well as those that are inherent therein. While compositions and methods are described in terms of "comprising", "containing", or "including" various components or steps, the compositions and methods can also "consist essentially of" or "consist of" the various components and steps. Moreover, the indefinite articles "a" or "an", as used in the claims, are defined herein to mean one or more than one of the elements that it introduces.

**Claims**

1. A method for determining the concentration of particulates to be contained in a drilling fluid, the method comprising the steps of:

   (i) providing a test base drilling fluid having a first normal stress difference $N_{1(TB)}$, adding a first concentration of test particulates to the test base drilling fluid, and adjusting the concentration of the test particulates in the test base drilling fluid so as to achieve a minimum concentration of test particulates which enables the fluid to cause plugging of a tapered slot in a particle plugging apparatus, wherein the test base drilling fluid containing the minimum concentration of test particulates has a first normal stress difference $N_{1(TA)}$;
   (ii) calculating the $\Delta N_{1(P)}$ value of the test base drilling fluid, wherein $\Delta N_{1(P)} = |N_{1(TA)}| - |N_{1(TB)}|$; and
   (iii) providing a drilling fluid comprising a base drilling fluid and a plurality of particulates, and adjusting the concentration of particulates contained in the drilling fluid based on a comparison between the $\Delta N_{1(F)}$ value of the drilling fluid and the $\Delta N_{1(P)}$ value of the test drilling fluid calculated in step (ii), such that the drilling fluid satisfies $\Delta N_{1(F)} \geq \Delta N_{1(P)}$;

   wherein $\Delta N_{1(F)} = |N_{1(A)}| - |N_{1(B)}|$, $N_{1(A)}$ is the first normal stress difference of the drilling fluid containing the particulates, and $N_{1(B)}$ is the first normal stress difference of the drilling fluid in the absence of the particulates; and
   wherein each first normal stress difference is determined by rotational rheometry using a parallel plate geometry at 25°C, 101,325 Pa (1 atm) and a plate gap of 1 mm, and the first normal stress differences apply to shear rates greater than 5 s$^{-1}$.

2. A method according to Claim 1, wherein the particulates comprise a lost circulation material.

3. A method according to Claim 2, wherein the lost circulation material comprises fibres.

4. A method according to any preceding claim, wherein the base drilling fluid comprises a fluid selected from an oil-based fluid, an aqueous-based fluid, a water-in-oil emulsion, and an oil-in-water emulsion.

5. A method according to any preceding claim, wherein the base drilling fluid further comprises an additive selected from a salt; a weighting agent; an inert solid; a fluid loss control agent; an emulsifier; a dispersion aid; a corrosion inhibitor; an emulsion thinner; an emulsion thickener; a viscosifying agent; a high-pressure, high-temperature emulsifier-filtration control agent; a surfactant; a particulate; a proppant; a lost circulation material; a pH control additive; a foaming agent; a breaker; a biocide; a crosslinker; a stabilizer; a chelating agent; a scale inhibitor; a gas; a mutual solvent; an oxidizer; a reducer; and any combination thereof.

6. A method according to any preceding claim, wherein the base drilling fluid comprises an oil-based fluid and a polar organic molecule.

7. A method according to any preceding claim, further comprising the step of introducing the drilling fluid containing the adjusted concentration of particulates into a wellbore penetrating a subterranean formation.

8. A method according to any preceding claim, wherein the test particulates and the particulates in the drilling fluid are the same.

**Patentansprüche**

1. Verfahren zur Bestimmung der Konzentration von partikulären Feststoffen, die in einer Bohrflüssigkeit enthalten sein soll, wobei das Verfahren die Schritte umfasst:

   (i) Bereitstellen einer Test-Basis-Bohrflüssigkeit mit einer ersten Normalspannungsdifferenz $N_{1(TB)}$, Zugeben einer ersten Konzentration von Test-partikelförmigen Feststoffen zu der Test-Basis-Bohrflüssigkeit und Einstellen der Konzentration der Test-partikelförmigen Feststoffe in der Test-Basis Bohrflüssigkeit, um so eine minimale Konzentration von Test-partikelförmigen Feststoffen zu erhalten, welche ermöglicht, dass die Flüssigkeit ein Verstopfen eines sich verjüngenden Auslasses in einer Partikel-Verstopfungsvorrichtung verursacht, worin die Test-Basis-Bohrflüssigkeit, die die minimale Konzentration an Test-partikelförmigen Feststoffen enthält, eine erste Normalspannungsdifferenz $N_{1(TA)}$ aufweist;

(ii) Berechnen des $\Delta N_{1(P)}$-Werts der Test-Basis-Bohrflüssigkeit, worin

$$\Delta N_{1(P)} = |\Delta N_{1(TA)}| - |\Delta N_{1(P)}|;$$

und

(iii) Bereitstellen einer Bohrflüssigkeit, die eine Basis-Bohrflüssigkeit und eine Vielzahl von partikelförmigen Feststoffen umfasst, und Einstellen der Konzentration der partikelförmigen Feststoffe, die in der Bohrflüssigkeit enthalten sind, auf Grundlage eines Vergleichs zwischen dem $\Delta N_{1(F)}$-Wert der Bohrflüssigkeit und des $\Delta N_{1(P)}$ - Werts der Test-Bohrflüssigkeit, die in Schritt (ii) berechnet wurde, so dass die Bohrflüssigkeit $\Delta N_{1(F)} \geq \Delta N_{1(P)}$ erfüllt;

worin $\Delta N_{1(F)} = |N_{1(A)}| - |N_{1(B)}|$ ist, $N_{1(A)}$ die erste Normalspannungsdifferenz der Bohrflüssigkeit, die die partikelförmigen Feststoffe enthält, ist und $N_{1(B)}$ die erste Normalspannungsdifferenz der Bohrflüssigkeit in der Abwesenheit von partikelförmigen Feststoffen ist;
und
worin jede erste Normalspannungsdifferenz bestimmt wird durch Rotationsrheometrie unter Verwendung einer parallelen Plattengeometrie bei 25°C, 101.325 Pa (1 Atm.) und einem Plattenabstand von 1 mm, und die erste Normalspannungsdifferenz sich auf Scherraten größer als 5 s$^{-1}$ beziehen.

2. Verfahren gemäß Anspruch 1, worin die partikelförmigen Feststoffe ein verlorengegangenes Zirkulationsmaterial umfassen.

3. Verfahren gemäß Anspruch 2, worin das verlorengegangene Zirkulationsmaterial Fasern umfasst.

4. Verfahren gemäß irgendeinem vorhergehenden Anspruch, worin die Basis-Bohrflüssigkeit eine Flüssigkeit umfasst, die ausgewählt ist aus einer auf Öl basierenden Flüssigkeit, einer auf Wasser basierenden Flüssigkeit, einer Wasser-in-Öl-Emulsion und einer Öl-in-Wasser-Emulsion.

5. Verfahren gemäß irgendeinem vorhergehenden Anspruch, worin die Basis-Bohrflüssigkeit ferner ein Additiv umfasst, ausgewählt aus einem Salz; einem Beschwerungsmittel; einem inerten Feststoff; einem Fluiditätsverlust-Kontrollmittel; einem Emulgator; einem Dispersionshilfsstoff; einem Korrosionsinhibitor; einem Emulsionsverdünner, einem Emulsionsverdicker; einem viskositätsmodifizierenden Mittel; einem Hochdruck-Hochtemperatur-Emulgierfiltrations-Kontrollmittel; einem Tensid; einem partikelförmigen Feststoff; einem Spaltenfüllenden Mittel; einem verlorengegangenen Zirkulationsmaterial; einem Additiv zur pH-Kontrolle; einem Schäummittel; einem Unterbrecher; einem Biocid; einem Vernetzungsmittel; einem Stabilisator; einem Chelatbildner; einem Kesselsteininhibitor; einem Gas; einem wechselseitigen Lösungsmittel; einem Oxidationsmittel; einem Reduktionsmittel; und jeglicher Kombination hiervon.

6. Verfahren gemäß irgendeinem vorhergehenden Anspruch, worin die Basis-Bohrflüssigkeit eine auf Öl basierende Flüssigkeit und ein polares organisches Molekül umfasst.

7. Verfahren gemäß irgendeinem vorhergehenden Anspruch, ferner umfassend einen Schritt zum Einführen der Bohrflüssigkeit, die die eingestellte Konzentration an partikelförmigen Feststoffen enthält, in eine Bohrung, die eine subterrane Formation penetriert.

8. Verfahren gemäß irgendeinem vorhergehenden Anspruch, worin die Test-partikelförmigen Feststoffe und die partikelförmigen Feststoffe in der Bohrflüssigkeit die gleichen sind.

**Revendications**

1. Procédé de détermination de la concentration de particules devant être contenues dans un fluide de forage, le procédé comprenant les étapes de :

(i) fourniture d'un fluide de forage de base de test présentant une première différence de contrainte normale $N_{1(TB)}$, l'ajout d'une première concentration de particules de test au fluide de forage de base de test, et d'ajustement de la concentration des particules de test dans le fluide de forage de base de test de manière à atteindre une concentration minimale de particules de test qui permette au fluide de provoquer un bouchage d'une fente effilée dans un appareil de bouchage de particules, dans lequel le fluide de forage de base de test contenant la concentration minimale de particules de test présente une première différence de contrainte normale $N_{1(TA)}$ ;

(ii) calcul de la valeur $\Delta N_{1(P)}$ du fluide de forage de base de test, dans lequel $\Delta N_{1(P)} = |N_{1(TA)}| - |N_{1(TB)}|$; et

(iii) fourniture d'un fluide de forage comprenant un fluide de forage de base et une pluralité de particules, et d'ajustement de la concentration de particules contenues dans le fluide de forage sur la base d'une comparaison entre la valeur $\Delta N_{1(F)}$ du fluide de forage et la valeur $\Delta N_{1(P)}$ du fluide de forage de test calculée à l'étape (ii), de sorte que le fluide de forage soit conforme à $\Delta N_{1(F)} \geq \Delta N_{1(P)}$ ;

dans lequel $\Delta N_{1(F)} = |N_{1(A)}| - |N_{1(B)}|$, $N_{1(A)}$ est la première différence de contrainte normale du fluide de forage contenant les particules, et $N_{1(B)}$ est la première différence de contrainte normale du fluide de forage en l'absence des particules ; et

dans lequel chaque première différence de contrainte normale est déterminée par une rhéométrie rotationnelle en utilisant une géométrie de plaques parallèles à 25 °C, 101 325 Pa (1 atm) et un espacement de plaques de 1 mm, et les premières différences de contraintes normales s'appliquent à des taux de cisaillement supérieurs à 5 s$^{-1}$.

2. Procédé selon la revendication 1, dans lequel les particules comprennent un matériau colmatant.

3. Procédé selon la revendication 2, dans lequel le matériau colmatant comprend des fibres.

4. Procédé selon l'une quelconque des revendications précédentes, dans lequel le fluide de forage de base comprend un fluide sélectionné parmi un fluide à base de pétrole, un fluide à base d'eau, une émulsion eau-dans-huile, et une émulsion huile-dans-eau.

5. Procédé selon l'une quelconque des revendications précédentes, dans lequel le fluide de forage de base comprend en outre un additif sélectionné parmi un sel ; un agent alourdissant ; un solide inerte ; un agent de régulation de perte de fluide ; un émulsifiant ; une aide à la dispersion ; un inhibiteur de corrosion ; un diluant d'émulsion ; un épaississant d'émulsion ; un agent d'amélioration d'indice de viscosité ; un agent de régulation de filtration d'émulsifiant à haute pression et à haute température ; un tensioactif ; une particule ; un agent de soutènement ; un matériau colmatant ; un additif de régulation de pH ; un agent moussant ; un agent de rupture ; un biocide ; un agent de réticulation ; un stabilisateur ; un agent de chélation ; un inhibiteur de tartre ; un gaz ; un cosolvant ; un oxydant ; un réducteur ; et toute combinaison de ceux-ci.

6. Procédé selon l'une quelconque des revendications précédentes, dans lequel le fluide de forage de base comprend un fluide à base d'huile et une molécule organique polaire.

7. Procédé selon l'une quelconque des revendications précédentes, comprenant en outre l'étape d'introduction du fluide de forage contenant la concentration ajustée de particules dans un puits de forage pénétrant une formation souterraine.

8. Procédé selon l'une quelconque des revendications précédentes, dans lequel les particules de test et les particules dans le fluide de forage sont les mêmes.

*FIG. 1*

**FIG. 2A**

**FIG. 2B**

Cellulosic Fiber - 1

Cellulosic Fiber - 2

Carbon Fiber

Oil Coated Fiber

*FIG. 3*

Aqueous Drilling Fluid With 0.5 ppb Carbon Fibers

Aqueous Drilling Fluid With 2.5 ppb Carbon Fibers

*FIG. 4*

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 4562985 A
- US 20100018294 A1
- US 20100137168 A
- US 20090008095 A
- US 20090255668 A1
- US 5905061 A
- US 5977031 A
- US 6828279 B

### Non-patent literature cited in the description

- **D. F. JAMES.** *Annu. Rev. Fluid Mech.,* 2009, vol. 41, 129-142
- Degradable Aliphatic Polyesters. Advances in Polymer Science. vol. 157